Europäisches Patentamt

European Patent Office

Office européen des brevets

(11) Veröffentlichungsnummer: **0 036 484**
**B1**

(12) **EUROPÄISCHE PATENTSCHRIFT**

(45) Veröffentlichungstag der Patentschrift: **03.12.86**

(21) Anmeldenummer: **81101093.3**

(22) Anmeldetag: **16.02.81**

(51) Int. Cl.⁴: **G 01 C 22/02**

(54) **Messeinrichtung zum Feststellen einer mit einem Fahrzeug gefahrenen Strecke.**

(30) Priorität: **19.02.80 DE 3006079**

(43) Veröffentlichungstag der Anmeldung:
**30.09.81 Patentblatt 81/39**

(45) Bekanntmachung des Hinweises auf die
Patenterteilung:
**03.12.86 Patentblatt 86/49**

(84) Benannte Vertragsstaaten:
**BE CH DE FR GB IT LI NL SE**

(56) Entgegenhaltungen:
**DE-A-2 601 711**
**US-A-3 779 456**
**US-A-4 185 489**

(73) Patentinhaber: **Matra-Werke GmbH**
**Dieselstrasse 30-40**
**D-6000 Frankfurt/Main (DE)**

(72) Erfinder: **Spreng, Karl**
**Breslauer Strasse 37**
**D-6056 Heusenstamm (DE)**

(74) Vertreter: **Schaefer, Gerhard, Dr.**
**Linde Aktiengesellschaft Zentrale**
**Patentabteilung**
**D-8023 Höllriegelskreuth (DE)**

Courier Press, Leamington Spa, England.

## Beschreibung

Die Erfindung betrifft eine Meßeinrichtung zum Feststellen einer mit einem mit einem Fahrtschreiber oder einem Tachometer versehenen Fahrzeug gefahrenen Strecke mit einer Impulsgeberscheibe, die mit Verbindungsbauteilen zur lösbaren Verbindung mit einem Rad des Fahrzeuges versehen ist und die gleichmäßig am Umfang verteilt Markierungen aufweist, und mit einem mit diesen Markierungen der Impulsgeberscheibe zusammenwirkenden Impulsgeber und mit einem Rechengerät, in das eine Größe für den Radradius eingebbar ist und das aus dieser Größe und der Anzahl der vom Impulsgeber signalisierten Impulse einen Wert für die Fahrstrecke ermittelt und mit einer Anzeigeeinrichtung für den ermittelten Wert versehen ist. Eine solche möglichst genaue Messung ist erforderlich, um beim Einchen Von Tachometern und Fahrtschreibern feststellen zu können, ob die tatsächlich gefahrene Strecke mit dem Wert, der in dem Tachometer bzw. Fahrtschreiber eingegeben wird, übereinstimmt. In bestimmten nationalen Bestimmungen ist das Abrollen des Fahrzeuges, dessen Tachometer oder Fahrtschreiber geprüft werden soll, auf einer ebenen Strecke von einer bestimmten Länge vorgeschrieben. Unter bestimmten Bedingungen kann das Abrollen auf einer ebenen Fahrbahn ersetzt werden durch ein Abrollen auf einem Rollenprüfstand. Solche Prüfungen sind insbesondere dann erforderlich, wenn im Getriebe zwischen Fahrzeugrad und der Welle, die zum Tachometer bzw. Fahrtschreiber führt, Zahnräder ausgetauscht worden sind, wobei der Austausch möglicherweise die Folge haben kann, daß die Gesamtübersetzung nach dem Austausch nicht mehr die gleiche ist wie vor dem Austausch. Eine Möglichkeit ist, das Fahrzeug auf ebener Fahrbahn genau eine vorgegebene Strecke fahren zu lassen und während dieser Fahrt die Anzahl der Umdrehungen der Fahrtschreibereingangswelle zu messen. In sehr vielen Fällen steht eine freie gerade ebene Fahrtstrecke hinreichender Länge nicht zur Verfügung. Deshalb wird die Messung meistens auf einem Rollenprüfstand durchgeführt. Die bisher bekannten Meßeinrichtungen für den genannten Zweck sind auf einen bestimmten Rollenumfang des Prüfstandes abgestimmt bzw. werden nur zusammen mit einem Rollenprüfstand ausgeliefert. Bei diesen bislang bekannten Meßeinrichtungen wird gemessen:

a) Die Wegstrecke aus der Umdrehungszahl der Prüfstandrollen

b) der Reifenumfang durch ein Reifenumfang - Meßgerät. Ferner muß ein Korrekturwert eingegeben werden, der die verschiedenen Reifentypen berücksichtigt, weil sich der Reifen auf einem Rollenprüfstand anders eindrückt wie auf einer ebene Fahrbahn. Von der Größe der Eindrückung ist aber der jeweils wirksame Reifendurchmesser abhängig. Die Verbindung von Meßgerät mit jeweils einem bestimmten Prüfstand mit bestimmtem Rollendurchmesser ist nachteilhaft, weil diese Geräte nur auf jeweils dem bestimmten Prüfstand benutzt werden können. Auzustreben ist, ein Gerät liefern zu können, das auf allen Rollenprüfständen verwendbar ist. Zweck derartiger Geräte ist es also, festzustellen und zu prüfen, ob beim Durchfahren einer bestimmten Strecke diese Strecke genau angezeigt wird.

Für den umgekehrten Zweck, nämlich für das Anzeigen der Länge einer mit dem Fahrzeug zurückgelegten Strecke, ist eine fahrbare Vorrichtung zum Erfassen von Straßendaten bekannt, die einen Lochkranz aufweist, welcher mit einem Meßrad des Fahrzeuges lösbar verbunden ist und am Umfang gleichmäßig verteilte Markierungen in Form von Löchern aufweist, sowie mit einer Lichtschranke verbunden ist, deren Lichstrahl durch die Stege zwischen den Löchern in dem Lochkranz unterbrochen werden kann. Weiterhin ist ein Meßprogramm - Rechengerät vorgesehen, in das eine Größe für den Meßrad-Umfang eingebbar ist und das aus dieser Größe und der Anzahl der von der Lichtschranke signalisierten Impulse einen Wert für Fahrstrecke ermittelt und mit einer Sichtanzeige für den ermittelten Wert versehen ist (DE—A—26 04 711). Ihrer Aufgabe entsprechend ist diese Vorrichtung dafür ausgelegt, während langer Fahrstrecken am Fahrzeug zu verbleiben. Deshalb ist ein relativ großer Aufwand zum Anbauen der Vorrichtung erforderlich, aber auch zulässig. Die Gabellichtschranke wird an einer geeigneten Stelle des Fahrzeuges montiert und der Lochkranz wird über eine biegsame Welle vom Fahrzeug-Meßrad aus angetrieben, wobei wiederum eine geeignete Verbindung zwischen Fahrzeug - Deßrad und biegsamer Welle hergestellt werden muß. Eine derartige Vorrichtung und insbesondere das Anbauen einer solchen Vorrichtung an ein Fahrzeug ist sehr aufwendig.

Bei einer anderen bekannten Einrichtung zum Messen der mit einem Fahrzeug zurückgelegten Strecke wird an die Nabe eines Fahrzeugrades eine Befestigung angeklammert, die mit der Welle eines mechanischen Umdrehungszählers verbunden wird. Damit dieser Umdrehungszähler nicht einfach zusammen mit seiner Welle und dem Rad umläuft, ist am Gehäuse des zählers einer Stange als Hebelarm befestigt, an deren Ende ein Belastungsgewicht vorgesehen ist, welches an dieser Stange frei pendelt, insbesondere bei Beschleunigungen oder Verzögerungen des Fahrzeuges und unter Einfluß des aus der mechanischen Reibung im Zähler hervorgerufenen Drehmomentes pendelt (US—A—3 779 456). Diese Einrichtung ist in ihrem Aufbau sehr primitiv, erlaubt keine genauen Messungen, da die kleinste ablesbare Strecke einem Radumfang entspricht, und das Ablesen ist nur an dem Zähler neben dem Rad selbst möglich. Der Aufbau bedingt, daß verschiedene Störeinflüsse möglich sind.

Der Erfindung liegt die Aufgabe zugrunde, eine Meßeinrichtung der eingangs genannten Art zu schaffen, die auf jedem beliebigen Rollenprüfstand angewendet werden kann, also unabhängig vom Rollenprüfstand ist und leicht an- und abgebaut werden kann und die sowohl in der Herstellung als auch in Bezug auf den erforderlichen Zeitaufwand bei der Montage und im Betrieb günstig ist.

Diese Aufgabe wird gelöst wie im Patentanspruch 1 angegeben.

Durch die Verbindungsbauteile kann die Impulsgeberscheibe und über diese das gesamte Gerät leicht am Fahrzeugrad angebaut werden und auch leicht wieder von diesem gelöst werden. Da der Impulsgeberträger sich nicht mit dem Rad dreht, werden bei der Drehung des Rades durch die Markierungen in dem Impulsgeber Impulse ausgelöst, die im Rechengerät gezählt und ausgewertet werden. Die Markierungen können hell - dunkel - Farbmarkierungen auf der Seitenfläche der Scheibe sein, die in einer lichtempfindlichen Einrichtung des Impulsgebers Signale auslösen. Wegen der Gefahr der Verschmutzung solcher hell - dunkel - Farbmarkierungen ist es günstiger Markierungen vorzusehen, die ein elektrostatisches oder magnetisches Feld am Impulsgeber beeinflussen. Zu diesem Zweck kann die Scheibe aus einem metallischen Werkstoff bestehen und an ihrem Umfang gleichmäßig aufgetragene Vorsprünge aufweisen, von denen jeder bei Vorbeigang an dem Impulsgeber jeweils einen Impuls auslöst. Zu diesem Zweck können am Umfang der Scheibe Ausfräsungen vorgesehen sein, so daß eine bestimmte Anzahl von Vorsprüngen gebildet wird. Falls es billiger ist, können als Scheibe auch verschlissene Zahnräder, beispielsweise Kettenzahnräder, verwendet werden, wenn die Anzahl der Zähne der erforderlichen Anzahl von Markierungen entspricht oder es kann jede beliebige Anzahl von Markierungen gewählt und das Rechengerät auf diese Anzahl eingestellt werden. Das Rechengerät wirkt insoweit als Multiplikator, der den Wert für den Radradius mit der Anzahl der Impulse multipliziert, wobei die Anzahl der Impulse ein Maß für den Raddrehwinkel und damit die Radumdrehung ist.

Mit Rücksicht auf mögliche Ungleichmäßigkeiten im Reifen ist es zweckmäßig, den tatsächlichen Raddurchmesser an zwei Stellen des Reifens zu messen, die beispielsweise um 180° gegeneinander versetzt sind, das heißt der Raddurchmesser wird an einer Stelle gemessen und dann das Fahrzeug so weit verfahren, daß das Rad um einen entsprechenden Winkel, beispielsweise genau 180° gedreht ist. Als tatsächlicher Raddurchmesser wird dann der Mittelwert dieser beiden Meßwerte eingegeben. Dadurch können auch weitgehend Fehler eliminiert werden, die durch ungenaue Angabe der Radachse und damit des Endes des Radradius entstehen. Das Rechengerät kann zum Ermitteln des Mittelwerts aus zwei eingegebenen Werten für den Radradius vorgesehen sein.

In den Impulsgeberträger kann auch eine Meßeinrichtung eingebaut werden, beispielsweise ein abrollbares Meßband oder eine durchsteckbare Meßlatte oder eine Scherentrapez - Einrichtung, wie bei Stromabnehmern üblich, die bis auf die Fahrbahn dicht neben dem Rad herabgezogen werden kann und auf Knopfdurck oder bei Berührung mit der Fahrbahn den Meßwert für den Radradius selbsttätig mit auf das Rechengerät überträgt.

Das Rechengerät kann mit einer Vorwahl der zu fahrenden Meßstrecke mit automatischer Meßwertfesthaltung bei erreichter Vorwahlmeßstrecke versehen sein, wobei beispielsweise zur Begrenzung der Stellenzahl der Vorwahlmeßstrecke auf einen beliebigen ganzen Meterwert zwischen einem Meter und neunundneunzig Metern festgelegt werden kann. Auch kann ein Start-Stopp-Ausgang zur Steuerung des zusätzlich erforderlichen Meßgerätes vorgesehen sein. Ist jedoch zusätzliches Messen der Umdrehungen am Fahrtschreibergetriebe mit Anzeige der Impulse bei gefahrener Meßstrecke vorgesehen, kann das zusätzlich erforderliche Meßgerät entfallen, wenn beide Meßwertsignale auf das gleiche Reckengerät gegeben und dort entsprechend verarbeitet werden. In diesem Falle werden die Meßwerte beider Signalgeber—nämlich am Fahrtschreiber, Tachograph oder Tachometer einerseits und an der Impulsgeberscheibe andererseits, gemeinsam verarbeitet und gegebenenfalls setzt ein Startsignal beide Signalgeber gleichzeitig in Funktion bzw. in Verbindung mit dem Rechner und ein Stopp-Signal beendet für beide gleichzeitig das Einwirken auf den Rechner.

An der Impulsgeberscheibe ist eine Lagerung für den Impulsgeberträger vorgesehen, damit sich dieser relativ gegenüber der Impulsgeberscheibe drehen kann, wobei die Impulsgeberscheibe sich dreht und der Impulsgeberträger raumfest bleiben soll. Das Ziel, daß der Impulsgeberträger im Raum stehen bleibt, kann erreicht werden dadurch, daß das vom Impulsgeberträger entfernt angeordnete Rechengerät mit diesem durch ein Kabel oder dergleichen verbunden ist, das hinreichend steif und zugfest ist, um den Impulsgeberträger am Mitdrehen mit der Impulsgeberscheibe zu hindern, so daß das Kabel als Festlegevorrichtung wirkt. In einer besonders vorteilhaften Weiterausgestaltung ist jedoch vorgeshen, daß als Festlegevorrichtung einfache Schnüre oder andere Zugorgane dienen, die zweckmaßigerweise elastisch sind, um stoßweise Kraftänderungen, die auf den Impulsgeberträger einwirken, auszugleichen und die einerseits an dem von der Drehachse entfernten Ende des Impulsgeberträgers befestigt sind und andererseits an einem Fahrzeugteil oder an einem Teil des Rollenprüfstandes festgelegt werden. Zu diesem Zweck können am Ende des Zugorganes jeweils eine Klemmhalterung vorgesehen sein oder kann vorzugsweise jeweils ein Magnet vorgesehen sein, der an dem Fahrzeug zum Haften gebracht wird.

Als Verbindungsbauteile zur Verbindung der

Impulsgeberscheibe mit der Radnabe können ebenso wahlweise Haftmagnete oder Klemmvorrichtungen oder dergleichen vorgesehen sein.

Die Erfindung ist im weiteren anhand des in der Zeichnung dargestellten Ausführungsbeispieles erläutert.

Figur 1 zeigt einen vertikalen Axialschnitt durch ein Rad mit Meßeinrichtung.

Figur 2 zeigt eine axiale Ansicht des Rades am Fahrzeug auf dem Prüfstand und

Figur 3 zeigt eine Ansicht gemäß Figur 2 im größeren Maßstab.

Figur 4 zeigt einen Axialschnitt im größeren Maßstab als Figur 1.

Auf der Fahrbahn 1 stehen die beiden Zwillingsreifen 2, die jeweils mit iherer Felge 3 an der Radnabe befestigt sind, deren Gehäuse in dem Gehäuseteil 5 ein Radnabenuntersetzungsgetriebe und im Gehäuseteil 6 eine Radnabenlagerung aufnimmt.

Mittels dreier Haftmagnete 7 ist die Impulsgeberscheibe 8 an das Radnabengehäuse 6 angesetzt und zwar derart, daß sie auch bei Drehen des Rades ihre Lage beigehält. In ihrer Mittelachse ist die Impulsgeberscheibe 8 mit einer Achslagerhülse 9 fest verbunden, auf der mittels zweier Wälzlager 10 der Impulsgeberträger 11 gegenüber der Scheibe 8 drehbar gelagert ist. Das scheibenseitige Wälzlager 10 ist mit dem Innenring durch eine Zwischenhülse 12 genenüber der Impulsgeberscheibe 8 abgestützt, und die beiden Außenringe der beiden Wälzlager 10 sind durch eine Hülse 13 gegen-einander abgestützt und der Innenring des äußeren Wälzlager 10 ist durch einen Sicherungsring 14 auf der Achslagerhülse 9 festgelegt. In der Längsbohrung der Achslagerhülse 9 ist ein Mittenzentrierstift 15 verschiebbar und mittels der Feststellschraube 16 festlegbar. Dieser Mittenzentrierstift 15 ermöglicht durch seine Spitze 17 ein genaues Ausrichten auf den Radmittelpunkt bzw. die Radachse.

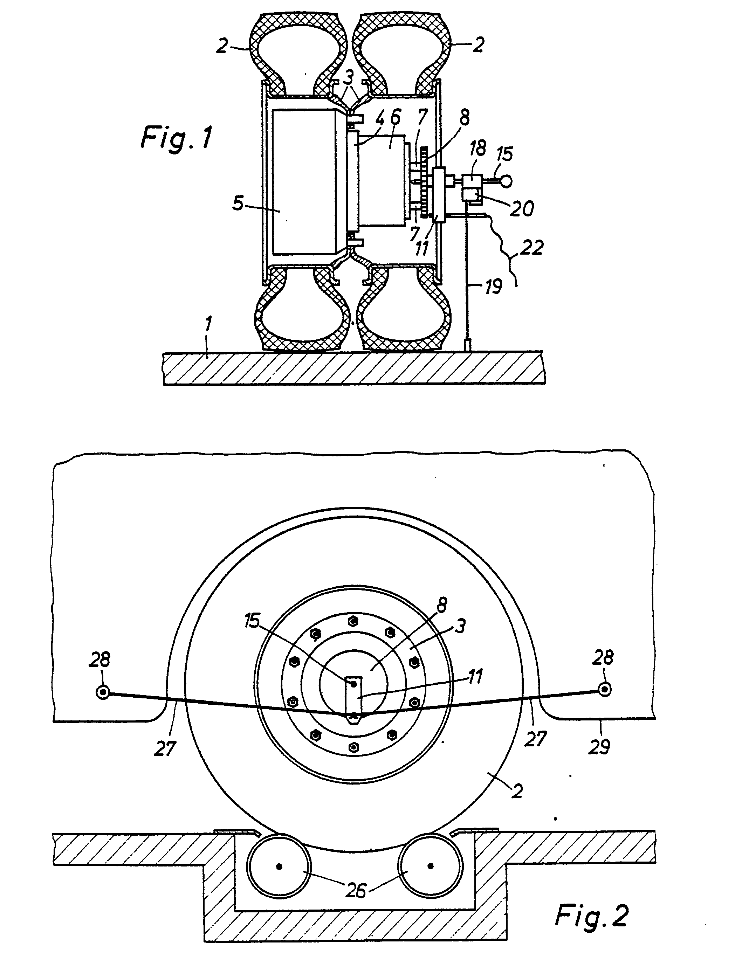

Bei der vollständigen Darstellung in Figur 1 ist auf dem Mittelzentrierstift 15 ein Bandmaßgehäuse 18 gelagert, aus dem ein Bandmaß 19 bis auf die Fahrbahn 1 in vertikaler Richtung herausziehbar ist, so daß auf einer Anzeigefläche 20 der Radradius abgelesen werden kann. Zusätzlich oder alternativ kann der Meßwert für den Radradius auch unmittelbar über ein Kabel auf das Rechengerät übertragen werden.

Im Impulsgeberträger 11 ist in dessen unteren Teil der Impulsgeber 21 gelagert, der über ein Kabel 22 mit dem in der Zeichnung nicht mehr dargestellten Rechengerät verbunden ist. Das dem Impulsgeberträger nahe Teil des Kabels 22 ist in einer Schutzhülse 23 geführt, um der Gefahr vorzubeugen, daß das Kabel direkt an der Kante des Impulsgeberträgers 11 abgeknickt wird. In einer in der Zeichnung nicht dargestellten vorteilhaften Ausgestaltung ist das äußere Ende des Schutzrohres 23 nach unten abgeknickt.

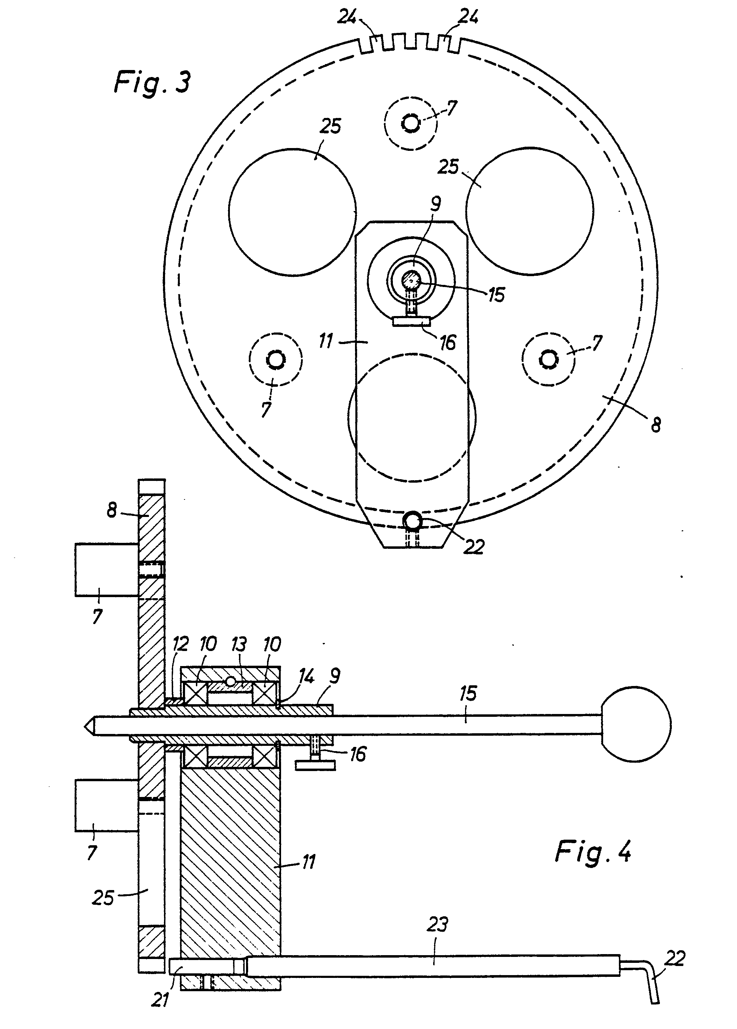

In Figur 3 ist zu erkennen, daß die Impulsgeberscheibe 8 an ihrem Umfang mit 72 Vorsprüngen 24 versehen ist, die durch ebensoviele Ausfräsungen zwischen den einzelnen Vorsprüngen 24 gebildet sind. Bei Vorbeilaufen jeweils eines Vorsprunges 24 vor dem Impulsgeber 21 wird in diesem ein Impuls ausgelöst.

Zur Verringerung der rotierenden Masse sind in der Impulsgeberscheibe 8 drei Löcher 25 vorgesehen.

In Figur 2 ist zu erkennen, daß die Reifen 2 auf zwei Rollen 26 eines Rollenprüfstandes stehen. Der Impulsgeberträger 11 ist mit zwei Schnüren 27 verbunden, die jeweils an ihrem freien Ende mit einen Haftmagnet 28 verbunden sind, der auf den Kotflügt 29 des Fahrzeuges geheftet ist.

**Patentansprüche**

1. Meßeinrichtung zum Feststellen einer mit einem mit einem Fahrtschreiber oder Tachometer versehenen Fahrzeug gefahrenen Strecke, mit einer Impulsgeberscheibe (8), die mit Verbindungsbauteilen (7) zur lösbaren Verbindung mit einem Rad (2, 3) des Fahrzeuges versehen ist und die gleichmäßig am Umfang verteilt Markierungen (24) aufweist und mit einem mit diesen Markierungen (24) der Impulsgeberscheibe (8) zusammenwirkenden Impulsgeber und mit einem Rechengerät, in das eine Größe für den Radradius eingebbar ist und das aus dieser Größe und der über einen Eingang des Rechengerätes diesem zugeführten Anzahl der vom Impulsgeber signalisierten Impulse einen Wert für die Fahrstrecke ermittelt und mit einer Anzeigeeinrichtung für einen ermittelten Wert versehen ist, gekennzeichnet durch folgende Merkmale:

a) mit der Impulsgeberscheibe (8) ist eine Achslagerhülse (9) fest verbunden, auf der ein den Impulsgeber (21) tragender Impulsgeberträger (11) drehbar gelagert ist,

b) der Impulsgeberträger (11) ist mit einer Festlegevorrichtung (27, 28) zum Festlegen des Impulsgeberträgers (11) genenüber dem Fahrzeug verbunden,

c) das Rechengerät weist einen zweiten Eingang auf, über den der Meßwert des Fahrtschreibers oder Tachometers zugeführt wird und ist für den Vergleich des aus der Auzahl der Impulse des Impulsgebers (21) und dem Raddurchmesser ermittelten Wertes mit den von dem Fahrtschreiber oder Tachometer zugeführten Wert vorgesehen, wobei der Vergleichswert der Anzeigeeinrichtung zugeführt wird.

2. Meßeinrichtung nach Anspruch 1, dadurch gekennzeichnet, daß die Impulsgeberscheibe (8) mit einer Vorrichtung (15) zum Ausrichten auf den Radmittelpunkt bzw. die Radachse versehen ist.

3. Meßeinrichtung nach Anspruch 1, dadurch gekennzeichnet, daß am Impulsgeberträger (11) oder dessen Lagerung (9) eine Radradius - Meßeinrichtung (18, 19) angeordnet ist.

4. Meßeinrichtung nach Anspruch 3, dadurch gekennzeichnet, daß die Radradius - Meßeinrichtung (18, 19) mit dem Rechengerät verbunden ist.

5. Meßeinrichtung nach Anspruch 1, dadurch gekennzeichnet, daß das Rechengerät mit einem Vorwahlgeber versehen ist.

6. Meßeinrichtung nach Anspruch 1, dadurch gekennzeichnet, daß das Rechengerät zum Ermitteln des Mittelwertes aus zwei eingegebenen Werten für den Radradius vorgesehen ist.

## Revendications

1. Installation de mesure pour déterminer le parcours effectué par un véhicule muni d'un tachygraphe ou tachymètre, comportant un disque impulseur (8) associé à des éléments de fixation (7) détachables pour sa fixation sur une roue (2, 3) du véhicule et pourvu de repéres (24) réguliérement répartis sur sa périphérie, ainsi qu'un générateur d'impulsions coopérant avec lesdits repères (24) du disque impulseur (8), et un calculateur susceptible de recevoir une grandeur correspondant au rayon de la roue pour déterminer, à partir de cette grandeur et du nombre d'impulsions signalées par le générateur d'impulsions, une valeur représentant le parcours, cependant qu'un dispositif indicateur est prévu pour afficher la valeur ainsi déterminée, caractérisée par les particularités suivantes:

a) une douille de portée (9) est rigidement liée au disque impulseur (8), et un support (11) portant le générateur d'impulsions (21) est monté à rotation sur ladite douille de portée;

b) le support (11) du générateur d'impulsions est relié à un dispositif d'immobilisation (27, 28) dudit support (11) par rapport au véhicule;

c) le calculateur présente une seconde entrée qui reçoit la valeur mesurée par le tachygraphe ou tachymètre, ce calculateur étant agencé pour comparer la valeur déterminée à partir du nombre d'impulsions du générateur d'impulsions (21) et du diamètre de la roue à la valeur reçue du tachygraphe ou tachymètre, la valeur de comparaison étant transmise au dispositif indicateur.

2. Installation de mesure selon la revendication 1, caractérisée en ce que le disque impulseur (8) comporte un dispositif (15) assurant l'alignement sur le centre et/ou l'axe de la roue.

3. Installation de mesure selon la revendication 1, caractérisée en ce que le support (11) du générateur d'impulsions ou son palier (9) est associé à un dispositif de mesure (18, 19) du rayon de la roue.

4. Installation de mesure selon la revendication 3, caractérisée en ce que ledit dispositif de mesure (18, 19) du rayon de la roue est relié au calculateur.

5. Installation de mesure selon la revendication 1, caractérisée en ce que ledit calculateur est équipé d'un dispositif présélecteur.

6. Installation de mesure selon la revendication 1, caractérisée en ce que ledit calculateur est agencé de manière à déterminer la moyenne de deux valeurs introduites, qui correspondent au rayon de la roue.

## Claims

1. A measuring device for determining a distance travelled by a vehicle provided with a tachograph or tachometer, comprising a pulse generator disc (8) which is provided with connecting component (7) for detachable connection to a wheel (2, 3) of the vehicle and which has markings (24) which are evenly distributed about the periphery, a pulse generator which co-operates with the markings (24) of the pulse generator disc (8), and a computer into which a magnitude for the wheel radius can be fed and which determines a value for the distance travelled from this magnitude and the number of pulses signalled by the pulse generator which are supplied to the computer through an input thereof, the computer being provided with a display device for a determined value, characterised by the following features:

a) the pulse generator disc (8) is fixedly connected to an axle bearing sleeve (9) on which a pulse generator carrier (11) supporting the pulse generator (21) is rotatably mounted,

b) the pulse generator carrier (11) is connected to a fixing device (27, 28) for fixing the pulse generator carrier (11) relative to the vehicle,

c) the computer has a second input through which the measured value of the tachograph or tachometer is supplied and has provision for comparing the value determined from the number of the pulses of the pulse generator (21) and the wheel diameter, with the value supplied by the tachograph or tachometer, the comparison value being fed to the display device.

2. A measuring device as claimed in Claim 1, characterised in that the pulse generator disc (8) is provided with a device (15) for alignment with the wheel centre or the wheel axis.

3. A measuring device as claimd in Claim 1, characterised in that a wheel radius measuring device (18, 19) is arranged on the pulse generator carrier (11), or the bearing (9) thereof.

4. A measuring device as claimed in Claim 3, characterised in that the wheel radius measuring device (18, 19) is connected to the computer.

5. A measuring device as claimed in Claim 1, characterised in that the computer is provided with a preselector.

6. A meauring device as claimed in Claim 1, characterised in that the computer has provision for determining the average value from two input values for the wheel radius.

Fig.1

Fig.2

0 036 484

Fig. 3

Fig. 4